# EUROPEAN PATENT APPLICATION

(11) **EP 4 462 900 A1**
(43) Date of publication of application: **13.11.2024**
(21) Application number: 22925769.6
(22) Date of filing: 30.12.2022
(51) Int. Cl.: H04W 64/00

(54) **COMMUNICATION METHOD AND COMMUNICATION APPARATUS**

(30) Priority: 11.02.2022 CN 202210130065
(71) Applicant: Huawei Technologies Co., Ltd., Shenzhen, Guangdong 518129 (CN)
(72) Inventor: TAO, Zhenyu, Shenzhen, Guangdong 518129 (CN); XIA, Linjin, Shenzhen, Guangdong 518129 (CN)
(74) Representative: Pfenning, Meinig & Partner mbB
(86) International application number: PCT/CN2022/143729
(87) International publication number: WO 2023/151420

(57) **Abstract**

Embodiments of this application provide a communication method and a communication apparatus. The communication method includes: A first location management network element receives first positioning request information from an access management network element, where the first positioning request information includes an identifier of a gateway mobile location center network element that requests location information, and the location information is a location of a terminal device. The first location management network element determines, based on the identifier of the gateway mobile location center network element that requests the location information, whether to allow a positioning request from the gateway mobile location center network element that requests the location information. The first location management network element sends first positioning request response information to the access management network element, where the first positioning request response information is used to notify the access management network element whether the positioning request for the terminal device is allowed. Therefore, the first location management network element can determine whether the gateway mobile location center network element that requests the location information is a gateway mobile location center network element deployed together with the first location management network element, to ensure security of device information.

## Description

This application claims priority to Chinese Patent Application No. 202210130065.2, filed with the China National Intellectual Property Administration on February 11, 2022, and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

Currently, a location service (location service, LCS), also referred to as a positioning service, is a service of determining an actual geographical location of a mobile user through collaboration between a wireless terminal and a wireless network, to provide location-related information required by the user. There are two concepts involved in the location service: a mobile positioning technology and a mobile positioning service. Based on positioning request initiators, there are three types of standard positioning services: a mobile originating location request (Mobile Originating Location Request, MO-LR), a mobile terminating location request (Mobile Terminating Location Request, MT-LR), and a network induced location request (Network Induced Location Request, NI-LR).

However, in the positioning services, an access and mobility management function (access and mobility management function, AMF) separately queries and obtains a location management function (location management function, LMF) and queries and obtains a gateway mobile location center (gateway mobile location center, GMLC) device. Currently, in the 3rd Generation Partnership Project (3rd Generation Partnership Project, 3GPP) standard, the AMF cannot select an LMF specified by the GMLC, or an LMF and a GMLC deployed in a same location area.

### SUMMARY

Embodiments of this application provide a communication method and a communication apparatus, to select an appropriate network element for positioning, so as to improve information security.

According to a first aspect, a communication method is provided. The method may be performed by a first LMF, or may be performed by a component (for example, a chip or a circuit) of the first LMF. This is not limited herein. For ease of description, the following uses an example in which the method is performed by the first LMF for description.

The method may include: A first LMF receives first positioning request information from an AMF, where the first positioning request information includes an identifier of a GMLC that requests location information, and the location information is a location of a terminal device; the first LMF determines, based on the identifier of the GMLC that requests the location information, whether to allow a positioning request from the GMLC that requests the location information; and the first LMF sends first positioning request response information to the AMF, where the first positioning request response information is used to notify the AMF whether the positioning request for the terminal device is allowed.

Based on the solution, the first LMF determines, based on the identifier of the GMLC that requests the location information and that is from the AMF, whether to allow the positioning request from the GMLC that requests the location information, and feeds back a determining result to the AMF. In the method, the first LMF can determine whether the GMLC that requests the location information is a GMLC deployed together with the first LMF, to determine whether to allow the positioning request. This further avoids a positioning request for another device, to ensure security of device information.

With reference to the first aspect, in some implementations of the first aspect, that the first LMF determines, based on the identifier of the GMLC that requests the location information, whether to allow the positioning request from the GMLC that requests the location information includes: The first LMF determines an association relationship based on the identifier of the GMLC that requests the location information; and the first LMF determines, based on the association relationship, whether to allow the positioning request from the GMLC that requests the location information, where the association relationship indicates whether the first LMF and the GMLC that requests the location information belong to a same device or a same enterprise device.

Based on the solution, the first LMF can determine, by using a method for determining an association manner, whether the GMLC that requests the location information is the GMLC deployed together with the first LMF, to increase flexibility of the solution.

With reference to the first aspect, in some implementations of the first aspect, that the first LMF determines the association relationship based on the identifier of the GMLC that requests the location information includes: The first LMF determines the association relationship based on an identifier of a first GMLC corresponding to the first LMF and the identifier of the GMLC that requests the location information, where the first GMLC and the first LMF belong to a same device or a same enterprise user.

Based on the solution, the first LMF can determine the association relationship based on the identifier of the first GMLC (for example, a network instance identifier of the first GMLC, an FQDN of the first GMLC, or a GMLC relationship list associated with the first LMF) and the identifier of the GMLC that requests the location information, to increase the flexibility of the solution.

With reference to the first aspect, in some implementations of the first aspect, that the first LMF determines, based on the association relationship, whether to allow the positioning request from the GMLC that requests the location information includes: When the association relationship is that the first LMF and the GMLC that requests the location information belong to a same device or a same enterprise device, the first LMF allows the positioning request from the GMLC that requests the location information.

Based on the solution, the first LMF can allow positioning requests from GMLCs of a same device or a same enterprise device, to ensure the security of device information.

With reference to the first aspect, in some implementations of the first aspect, the method further includes: The first LMF determines the location information, where the first positioning request response information includes the location information.

Based on the solution, the first LMF can send, to the AMF via the first positioning request response information, location information of a terminal device that initiates a positioning request, so that the AMF feeds back the location information to the terminal device.

With reference to the first aspect, in some implementations of the first aspect, that the first LMF determines, based on the association relationship, whether to allow the positioning request from the GMLC that requests the location information includes: When the association relationship is that the first LMF and the GMLC that requests the location information do not belong to a same device or a same enterprise device, the first LMF does not allow the positioning request from the GMLC that requests the location information.

Based on the solution, the first LMF can reject positioning requests from GMLCs of different devices or different enterprise devices, to ensure the security of device information.

With reference to the first aspect, in some implementations of the first aspect, that the first LMF determines, based on the identifier of the GMLC that requests the location information, whether to allow the positioning request from the GMLC that requests the location information includes: The first LMF sends authentication information to a first GMLC; the first LMF receives an authentication result from the first GMLC; and the first LMF determines, based on the authentication result, whether to allow the GMLC that requests the location information to perform positioning, where the first GMLC and the first LMF belong to a same device or a same enterprise user, the first positioning request information further includes the authentication information, and the authentication information is used to determine whether to allow the positioning request from the GMLC that requests the location information.

Based on the solution, the first LMF requests the first GMLC to perform a second check on the GMLC that requests the location information, to determine whether the GMLC that requests the location information is deployed on a same device or a same enterprise device. In this way, accuracy of the check is improved in a manner of the second check.

With reference to the first aspect, in some implementations of the first aspect, that the first LMF determines, based on the identifier of the GMLC that requests the location information, whether to allow the positioning request from the GMLC that requests the location information includes: The first LMF determines, based on authentication information, whether to allow the positioning request from the GMLC that requests the location information.

Based on the solution, the first LMF can determine, based on an authentication result of the first GMLC, whether to allow the positioning request from the GMLC that requests the location information, to increase flexibility of the solution.

With reference to the first aspect, in some implementations of the first aspect, when the first positioning request response information is used to notify that the positioning request for the terminal device is allowed, the method further includes: The first LMF determines the location information, where the first positioning request response information includes the location information.

Based on the solution, the first LMF can send, to the AMF via the first positioning request response information, the location information of the terminal device that initiates the positioning request, so that the AMF feeds back the location information to the terminal device.

According to a second aspect, a communication method is provided. The method may be performed by an AMF, or may be performed by a component (for example, a chip or a circuit) of the AMF. This is not limited herein. For ease of description, the following uses an example in which the method is performed by the AMF for description.

The method may include: An AMF receives a positioning request from a GMLC that requests location information, where the location information is a location of a terminal device; the AMF obtains an address of the first LMF corresponding to the GMLC that requests the location information; the AMF sends first positioning request information to the first LMF, where the first positioning request information includes an identifier of the GMLC that requests the location information; and the AMF receives first positioning request response information from the first LMF, where the first positioning request response information is used to notify whether the positioning request for the terminal device is allowed.

Based on the solution, after receiving the positioning request, the AMF obtains, based on the identifier of the GMLC that requests the location information, the address of the first LMF corresponding to the GMLC that requests the location information. This ensures that an LMF that is deployed on a same device or a same enterprise device as the GMLC that requests the location information can be found, to ensure security of device information.

With reference to the second aspect, in some implementations of the second aspect, that the AMF obtains the address of the first LMF corresponding to the GMLC that requests the location information includes: The AMF obtains registration subscription information; and the AMF obtains the address of the first LMF based on the registration subscription information, where the registration subscription information includes the address of the first LMF or an identifier of the first LMF.

Based on the solution, the AMF can obtain the address of the first LMF based on the registration subscription information, to increase flexibility of a solution of obtaining the address of the first LMF.

With reference to the second aspect, in some implementations of the second aspect, when the subscription registration information includes the identifier of the first LMF, the method further includes: The AMF obtains the address of the first LMF based on the identifier of the first LMF.

Based on the solution, the AMF can obtain the address of the first LMF based on the identifier of the first LMF, to increase the flexibility of a solution of obtaining the address of the first LMF.

With reference to the second aspect, in some implementations of the second aspect, that the AMF obtains the address of the first LMF corresponding to the GMLC that requests the location information includes: The AMF receives information from the GMLC that requests the location information; and the AMF obtains the address of the first LMF based on the information from the GMLC that requests the location information, where the information from the GMLC that requests the location information includes the address of the first LMF or an identifier of the first LMF.

Based on the solution, the AMF can receive the address of the first LMF that is sent by the GMLC that requests the location information, to increase the flexibility of a solution for obtaining the address of the first LMF.

With reference to the second aspect, in some implementations of the second aspect, when the information from the GMLC that requests the location information includes the identifier of the first LMF, the method further includes: The AMF obtains the address of the first LMF based on the identifier of the first LMF.

Based on the solution, the AMF can obtain the address of the first LMF based on the identifier of the first LMF, to increase the flexibility of a solution of obtaining the address of the first LMF.

With reference to the second aspect, in some implementations of the second aspect, the information from the GMLC that requests the location information further includes the identifier of the GMLC that requests the location information and authentication information, and the authentication information is used to determine whether to allow the positioning request from the GMLC that requests the location information.

Based on the solution, the AMF receives the authentication information from the GMLC that requests the location information, and sends the authentication information to the first LMF, so that the first LMF can determine, based on an authentication result obtained based on the authentication information, whether the GMLC that requests the location information is a GMLC deployed together with the first LMF, to ensure the security of device information.

With reference to the second aspect, in some implementations of the second aspect, the first positioning request information further includes the authentication information.

Based on the solution, the AMF sends the authentication information to the first LMF by using the first positioning request information, to increase the flexibility of the solution.

With reference to the second aspect, in some implementations of the second aspect, when the first positioning request response information is used to notify that the positioning request for the terminal device is allowed, the first positioning request response information includes the location information.

Based on the solution, the first LMF can send, to the AMF via the first positioning request response information, location information of a terminal device that initiates a positioning request, so that the AMF feeds back the location information to the terminal device.

With reference to the second aspect, in some implementations of the second aspect, the method further includes: The AMF obtains, based on the identifier of the GMLC that requests the location information, an address of the GMLC that requests the location information; and the AMF sends the location information to the GMLC that requests the location information.

Based on the solution, the AMF can send, based on the identifier of the GMLC that requests the location information, the location information to the GMLC that requests the location information, so that the terminal device obtains the location information, to improve the flexibility of the solution.

According to a third aspect, a communication method is provided. The method may be performed by a first GMLC, or may be performed by a component (for example, a chip or a circuit) of the first GMLC. This is not limited herein. For ease of description, the following uses an example in which the method is performed by the first GMLC for description.

The method may include: A first GMLC receives an authentication request from a first LMF, where the authentication request includes authentication information; the first GMLC determines an authentication result based on the authentication information, where the authentication result indicates whether a positioning request from the GMLC that requests location information is allowed; and the first GMLC sends the authentication result to the first LMF, where the first GMLC and the first LMF belong to a same device or a same enterprise device, and the authentication information is used to determine whether to allow the positioning request from the gateway mobile location center network element that requests the location information.

Based on the solution, the first GMLC can determine, based on the authentication information, whether the GMLC that requests the location information is deployed same as the first GMLC or is at a same location as the first GMLC, and feed back the authentication result to the first LMF, to increase flexibility of a solution in which the first LMF determines whether to allow the positioning request from the GMLC that requests the location information.

With reference to the third aspect, in some implementations of the third aspect, when the authentication information is valid, or the authentication information is authentication information generated by the first GMLC, that the first GMLC determines the authentication result based on the authentication information includes: The first GMLC determines that the authentication result is that the positioning request from the GMLC that requests location information is allowed.

Based on the solution, when the first GMLC determines that the authentication information is valid, or is the authentication information generated by the first GMLC, the positioning request from the GMLC that requests the location information is allowed, to ensure security of device information.

With reference to the third aspect, in some implementations of the third aspect, when the authentication information is invalid, or the authentication information is not authentication information generated by the first GMLC, that the first GMLC determines the authentication result based on the authentication information includes: The first GMLC determines that the authentication result is that the positioning request from the GMLC that requests location information is not allowed.

Based on the solution, when the first GMLC determines that the authentication information is invalid, or is not the authentication information generated by the first GMLC, the positioning request from the GMLC that requests the location information is rejected, to ensure the security of device information.

According to a fourth aspect, a communication method is provided. The method may be performed by an AMF, or may be performed by a component (for example, a chip or a circuit) of the AMF. This is not limited herein. For ease of description, the following uses an example in which the method is performed by the AMF for description.

The method may include: An access management network element receives second positioning request information from a terminal device, where the second positioning request information is used to obtain location information of the terminal device; the AMF obtains an address of the first LMF; the AMF sends third positioning request information to the first LMF, where the third positioning request information is used to request to obtain the location information, the location information is a location of the terminal device, and the third positioning request information includes an identifier of a first GMLC; and the AMF receives third positioning request response information from the first LMF, where the third positioning request response information indicates whether a positioning request for the terminal device is allowed, where the first GMLC and the first LMF belong to a same device or a same enterprise device, the second positioning request information includes policy data information, and the policy data information includes the identifier of the first GMLC.

Based on the solution, after receiving the positioning request, the AMF obtains, based on an identifier of a GMLC that requests the location information, the address of the first LMF corresponding to the GMLC that requests the location information. This ensures that an LMF that is deployed on a same device or a same enterprise device as the GMLC that requests the location information can be found, to ensure security of device information.

With reference to the fourth aspect, in some implementations of the fourth aspect, that the AMF obtains the address of the first LMF includes: The AMF obtains the address of the first LMF based on the policy data information, where the policy data information further includes information about the first LMF and information about the first GMLC.

Based on the solution, the information about the first LMF and the first GMLC that serve the terminal device is carried in the policy data information in a registration process of the terminal device, to ensure that an LMF and a GMLC that belong to a same device or a same enterprise device can be obtained in a procedure in which the AMF searches for the LMF.

With reference to the fourth aspect, in some implementations of the fourth aspect, when the policy data information includes an identifier of the first LMF, the method further includes: The AMF obtains the address of the first LMF based on the identifier of the first LMF.

Based on the solution, the AMF can obtain the address of the first LMF based on the identifier of the first LMF (for example, a network element instance identifier of the first GMLC or a host name of the first LMF), to improve flexibility of the solution.

With reference to the fourth aspect, in some implementations of the fourth aspect, when the second positioning request response information is used to notify that the positioning request for the terminal device is allowed, the second positioning request response information includes the location information.

Based on the solution, the first LMF can send, to the AMF by using the second positioning request response information, the location information of the terminal device that initiates the positioning request, so that the AMF feeds back the location information to the terminal device.

With reference to the fourth aspect, in some implementations of the fourth aspect, the method further includes: The AMF obtains an address of the first GMLC based on the identifier of the first GMLC; and the AMF sends the location information to the first GMLC.

Based on the solution, the AMF can send, based on the identifier of the first GMLC, the location information to the first GMLC, so that the terminal device obtains the location information, to improve the flexibility of the solution.

According to a fifth aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method may include: A terminal device receives policy data information from a PCF, where the policy data information includes information about a first LMF and a first GMLC that belong to the terminal device; and the terminal device sends second positioning request information to an AMF, where the second positioning request information is used to obtain location information of the terminal device, and the location information indicates a location of the terminal device, where the first GMLC and the first LMF belong to a same device or a same enterprise device.

Based on the solution, the information about the first LMF and the first GMLC that serve the terminal device is carried in the policy data information in a registration process of the terminal device, to ensure that an LMF and a GMLC that belong to a same device or a same enterprise device can be obtained in a subsequent procedure in which the AMF searches for the LMF.

According to a sixth aspect, a communication apparatus is provided, including a unit configured to perform the method described in the sixth aspect. The communication apparatus may be a first LMF, or may be implemented by a chip or a circuit disposed in the first LMF. This is not limited in this application.

The communication apparatus includes:
a transceiver unit, configured to receive first positioning request information from an AMF, where the first positioning request information includes an identifier of a GMLC that requests location information, and the location information indicates a location of a terminal device that initiates a positioning request; a processing unit, configured to determine, based on the identifier of the GMLC that requests the location information, whether a positioning request from the GMLC that requests the location information is allowed; and the transceiver unit is further configured to send first positioning request response information to the AMF, where the first positioning request response information is used to notify the AMF whether the positioning request for the terminal device is allowed.

With reference to the sixth aspect, in some implementations of the sixth aspect, the processing unit is further configured to determine an association relationship based on the identifier of the GMLC that requests the location information; the processing unit is further configured to determine, based on the association relationship, whether to allow the positioning request from the GMLC that requests the location information; where the association relationship indicates whether the first LMF and the GMLC that requests the location information belong to a same device or a same enterprise device.

With reference to the sixth aspect, in some implementations of the sixth aspect, the processing unit is further configured to determine the association relationship based on an identifier of a first GMLC corresponding to the first LMF and the identifier of the GMLC that requests the location information, where the first GMLC and the first LMF belong to a same device or a same enterprise user.

With reference to the sixth aspect, in some implementations of the sixth aspect, when the association relationship is that the first LMF and the GMLC that requests the location information belong to a same device or a same enterprise user, the processing unit is further configured to allow the positioning request from the GMLC that requests the location information.

With reference to the sixth aspect, in some implementations of the sixth aspect, the processing unit is further configured to determine the location information, and the first positioning request response information includes the location information.

With reference to the sixth aspect, in some implementations of the sixth aspect, when the association relationship is that the first LMF and the GMLC that requests the location information do not belong to a same device or a same enterprise user, the processing unit is further configured to not allow the positioning request from the GMLC that requests the location information.

With reference to the sixth aspect, in some implementations of the sixth aspect, the transceiver unit is further configured to send authentication information to the first GMLC; the transceiver unit is further configured to receive an authentication result from the first GMLC; and the processing unit is further configured to determine, based on the authentication result, whether the GMLC that requests the location information is allowed to perform positioning, where the first GMLC and the first LMF belong to a same device or a same enterprise user, the first positioning request information further includes the authentication information, and the authentication information is used to determine whether to allow the positioning request from the GMLC that requests the location information.

With reference to the sixth aspect, in some implementations of the sixth aspect, the processing unit is further configured to determine, based on the authentication information, whether to allow the positioning request from the GMLC that requests location information.

With reference to the sixth aspect, in some implementations of the sixth aspect, when the first positioning request response information is used to notify that the positioning request for the terminal device is allowed, the processing unit is further configured to determine the location information, and the first positioning request response information includes the location information.

For explanations and advantageous effects of related content of the communication apparatus provided in the sixth aspect, refer to the method described in the first aspect. Details are not described herein again.

According to a seventh aspect, a communication apparatus is provided, including a unit configured to perform the method described in the second aspect. The communication apparatus may be an AMF, or may be implemented by a chip or a circuit disposed in the AMF. This is not limited in this application.

The communication apparatus includes:
a transceiver unit, configured to receive a positioning request from a GMLC that requests location information, where the location information indicates a location of a terminal device that initiates the positioning request; and a processing unit, configured to obtain an address of the first LMF corresponding to the GMLC that requests the location information. The transceiver unit is further configured to send first positioning request information to the first LMF, where the first positioning request information includes an identifier of the GMLC that requests the location information. The transceiver unit is further configured to receive first positioning request response information from the first LMF, where the first positioning request response information is used to notify whether the positioning request for the terminal device is allowed.

With reference to the seventh aspect, in some implementations of the seventh aspect, the transceiver unit is further configured to obtain registration subscription information; and the processing unit is further configured to obtain the address of the first LMF based on the registration subscription information, where the registration subscription information includes the address of the first LMF or an identifier of the first LMF.

With reference to the seventh aspect, in some implementations of the seventh aspect, when the registration subscription information includes the identifier of the first LMF, the processing unit is further configured to obtain the address of the first LMF based on the identifier of the first LMF.

With reference to the seventh aspect, in some implementations of the seventh aspect, the transceiver unit is further configured to receive information from the GMLC that requests the location information; and the processing unit is further configured to obtain the address of the first LMF based on the information from the GMLC that requests the location information, where the information from the GMLC that requests the location information includes the address of the first LMF or the identifier of the first LMF.

With reference to the seventh aspect, in some implementations of the seventh aspect, the processing unit is further configured to obtain the address of the first LMF based on the identifier of the first LMF.

With reference to the seventh aspect, in some implementations of the seventh aspect, the information from the GMLC that requests the location information further includes the identifier of the GMLC that requests the location information and authentication information, and the authentication information is used to determine whether to allow the positioning request from the GMLC that requests the location information.

With reference to the seventh aspect, in some implementations of the seventh aspect, the first positioning request information further includes the authentication information.

With reference to the seventh aspect, in some implementations of the seventh aspect, when the first positioning request response information is used to notify that the positioning request for the terminal device is allowed, the first positioning request response information includes the location information.

With reference to the seventh aspect, in some implementations of the seventh aspect, the processing unit is further configured to obtain, based on the identifier of the GMLC that requests the location information, an address of the GMLC that requests the location information; and the transceiver unit is further configured to send the location information to the GMLC that requests the location information.

For explanations and advantageous effects of related content of the communication apparatus provided in the seventh aspect, refer to the method described in the second aspect. Details are not described herein again.

According to an eighth aspect, a communication apparatus is provided, including a unit configured to perform the method described in the third aspect. The communication apparatus may be a first GMLC, or may be implemented by a chip or a circuit disposed in the first GMLC. This is not limited in this application.

The communication apparatus includes:
a transceiver unit, configured to receive an authentication request from a first LMF, where the authentication request includes authentication information; and a processing unit, configured to determine an authentication result based on the authentication information, where the authentication result indicates whether a positioning request from a GMLC that requests location information is allowed. The transceiver unit is further configured to send the authentication result to the first LMF, where a first GMLC and the first LMF belong to a same device or a same enterprise device, and the authentication information is used to determine whether the positioning request from the gateway mobile location center network element that requests the location information is allowed.

With reference to the eighth aspect, in some implementations of the eighth aspect, when the authentication information is valid, or the authentication information is authentication information generated by the first GMLC, the processing unit is further configured to determine that the authentication result is that the positioning request from the GMLC that requests the location information is allowed.

With reference to the eighth aspect, in some implementations of the eighth aspect, when the authentication information is invalid, or the authentication information is not the authentication information generated by the first GMLC, that the processing unit is further configured to determine the authentication result based on the authentication information includes: The first GMLC determines that the authentication result is that the positioning request from the GMLC that requests the location information is not allowed.

For explanations and advantageous effects of related content of the communication apparatus provided in the eighth aspect, refer to the method described in the third aspect. Details are not described herein again.

According to a ninth aspect, a communication apparatus is provided, including a unit configured to perform the method described in the fourth aspect. The communication apparatus may be an AMF, or may be implemented by a chip or a circuit disposed in the AMF. This is not limited in this application.

The communication apparatus includes:
a transceiver unit, configured to receive second positioning request information from a terminal device, where the second positioning request information is used to obtain location information of the terminal device; and a processing unit, configured to obtain an address of the first LMF. The transceiver unit is further configured to send third positioning request information to the first LMF, where the third positioning request information is used to request to obtain the location information, the location information indicates a location of the terminal device, and the third positioning request information includes an identifier of a first GMLC. The transceiver unit is further configured to receive third positioning request response information from the first LMF, where the third positioning request response information indicates whether to allow a positioning request for the terminal device, the first GMLC and the first LMF belong to a same device or a same enterprise device, the second positioning request information includes policy data information, and the policy data information includes the identifier of the first GMLC.

With reference to the ninth aspect, in some implementations of the ninth aspect, the processing unit is further configured to obtain the address of the first LMF based on the policy data information, where the policy data information includes information about the first LMF and information about the first GMLC.

With reference to the ninth aspect, in some implementations of the ninth aspect, the processing unit is configured to obtain the address of the first LMF based on an identifier of the first LMF.

With reference to the ninth aspect, in some implementations of the ninth aspect, when the second positioning request response information is used to notify that the positioning request for the terminal device is allowed, the second positioning request response information includes the location information.

With reference to the ninth aspect, in some implementations of the ninth aspect, the processing unit is configured to obtain an address of the first GMLC based on the identifier of the first GMLC; and the transceiver unit is further configured to send the location information to the first GMLC.

For explanations and advantageous effects of related content of the communication apparatus provided in the ninth aspect, refer to the method described in the fourth aspect. Details are not described herein again.

According to a tenth aspect, a communication apparatus is provided, including a unit configured to perform the method described in the fifth aspect. The communication apparatus may be a terminal device, or may be implemented by a chip or a circuit disposed in the terminal device. This is not limited in this application.

The communication apparatus includes:
a transceiver unit, configured to receive policy data information from a PCF, where the policy data information includes information about a first LMF and a first GMLC that belong to a terminal device. The transceiver unit is further configured to send second positioning request information to an AMF, where the second positioning request information is used to obtain location information of the terminal device, the location information indicates a location of the terminal device, and the first GMLC and the first LMF belong to a same device or a same enterprise device.

For explanations and advantageous effects of related content of the communication apparatus provided in the tenth aspect, refer to the method described in the fifth aspect. Details are not described herein again.

According to an eleventh aspect, a communication apparatus is provided. The apparatus includes: a memory, configured to store a program; and at least one processor, configured to execute the computer program or instructions stored in the memory, to perform the method in any one of the possible implementations of the first aspect to the fifth aspect.

In an implementation, the apparatus is a first LMF.

In another implementation, the apparatus is a chip, a chip system, or a circuit used in the first LMF.

According to a twelfth aspect, this application provides a processor, configured to perform the methods provided in the foregoing aspects.

Unless otherwise specified, or if operations such as sending, and obtaining/ receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a thirteenth aspect, a computer-readable storage medium is provided. The computer-readable medium stores program code executed by a device, and the program code is used to perform the method in any one of the possible implementations of the first aspect to the fifth aspect.

According to a fourteenth aspect, a computer program product including instructions is provided. When the computer program product runs on a computer, the computer is enabled to perform the method in any one of the possible implementations of the first aspect to the fifth aspect.

According to a fifteenth aspect, a chip is provided. The chip includes a processor and a communication interface, and the processor reads, through the communication interface, instructions stored in a memory, to perform the method in any one of the possible implementations of the first aspect to the fifth aspect.

Optionally, in an implementation, the chip further includes the memory. The memory stores a computer program or the instructions. The processor is configured to execute the computer program or the instructions stored in the memory. When the computer program or the instructions is/are executed, the processor is configured to perform the method in any one of the possible implementations of the first aspect to the fifth aspect.

According to a sixteenth aspect, a transmission manner switching system is provided, including one or more of the first LMF, the AMF, and the first GMLC.

According to a seventeenth aspect, a transmission manner switching system is provided, including the first LMF and the AMF.

### BRIEF DESCRIPTION OF DRAWINGS

FIG. 1 is a schematic diagram of a network architecture applicable to an embodiment of this application;
FIG. 2 is a schematic diagram of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic block diagram of a communication apparatus 600 according to an embodiment of this application;
FIG. 7 is a schematic block diagram of another communication apparatus 700 according to an embodiment of this application; and
FIG. 8 is a schematic diagram of a chip system 800 according to an embodiment of this application.

### DESCRIPTION OF EMBODIMENTS

The following describes technical solutions of embodiments in this application with reference to the accompanying drawings.

The technical solutions in embodiments of this application may be applied to various communication systems, for example, a 5th generation (5th generation, 5G) or new radio (new radio, NR) system, a satellite communication system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions in embodiments of this application may be further applied to device-to-device (device-to-device, D2D) communication, vehicle-to-everything (vehicle-to-everything, V2X) communication, machine to machine (machine to machine, M2M) communication, machine type communication (machine type communication, MTC), industrial control, an intelligent transportation system (intelligent transportation system, ITS), mobile broadband, multimedia, and Internet of Things (Internet of Things, IoT) communication system, or another communication system.

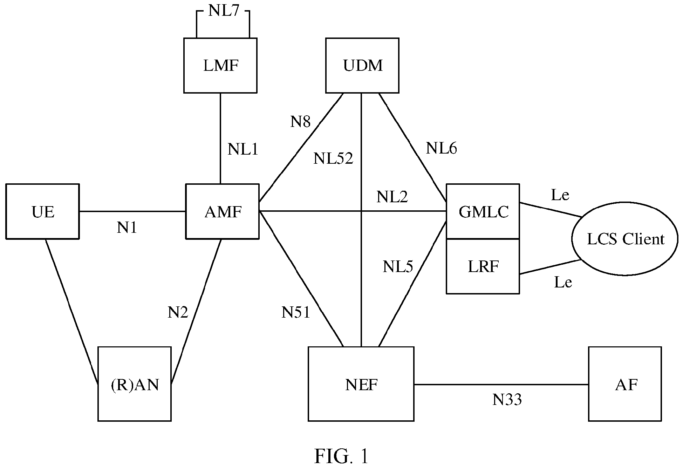

For ease of understanding embodiments of this application, a network architecture applicable to embodiments of this application is first described in detail with reference to FIG. 1.

For example, FIG. 1 is a schematic diagram of a network architecture applicable to an embodiment of this application. As shown in FIG. 1, for example, the network architecture may include but is not limited to, a (radio) access network ((radio) access network, (R)AN) device, an access and mobility management function (access and mobility management function, AMF), a network exposure function (network exposure function, NEF), an application function (application function, AF), a location management function (location management function, LMF), unified data management (unified data management, UDM), a gateway mobile location center (gateway mobile location center, GMLC), a location retrieval function (location retrieval function, LRF), and user equipment (user equipment, UE).

The following briefly describes network elements shown in FIG. 1.
1. UE may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides a voice/data for a user, for example, a handheld device having a wireless connection function or a vehicle-mounted device. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function or another processing device connected to a wireless modem, a wearable device, a terminal device in a 5G network, and a terminal device in a future evolved public land mobile network (public land mobile network, PLMN). This is not limited in embodiments of this application.

By way of example rather than limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of the user. The wearable device is not merely a hardware device, and can implement a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device in embodiments of this application may alternatively be a terminal device in an IoT system. IoT is an important part of future development of information technologies. A main technical feature of the IoT is connecting things to networks by using communication technologies, to implement an intelligent network for interconnection between persons and machines or between things.

It should be noted that the terminal device and an access network device may communicate with each other by using an air interface technology (for example, an NR technology or an LTE technology). The terminal device and the terminal device may communicate with each other by using an air interface technology (for example, an NR technology or an LTE technology).

In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete component.

2. (R)AN device may provide a function of accessing a communication network for an authorized user in a specific area, and may specifically include a wireless network device in a 3rd Generation Partnership Project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a radio access technology used in a 3rd generation (3rd generation, 3G), a 4th generation (4th generation, 4G), or a 5G system) and a non-3GPP (non-3GPP) access technology. The 3GPP access technology is an access technology that complies with a 3GPP standard specification. For example, an access network device in the 5G system is referred to as a next generation Node Base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), and the like. The AN device may allow interworking between a terminal device and a 3GPP core network by using a non-3GPP technology.

The AN device can be responsible for functions on an air interface side, such as radio resource management, quality of service (Quality of Service, QoS) management, and data compression and encryption. The AN device provides an access service for the terminal device, and further completes forwarding of a control signal and user data between the terminal device and a core network.

For example, the AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP). Alternatively, the AN device may include a gNB or a transmission point (TRP or TP) in a 5G (for example, NR) system, or one antenna panel or a group (including a plurality of antenna panels) of antenna panels of a base station in the 5G system. Alternatively, the AN device may include a network node constituting a gNB or a transmission point, for example, a distributed unit (distributed unit, DU), or a base station in a next-generation 6G communication system. A specific technology and a specific device form that are used by the AN device are not limited in embodiments of this application.

3. An access management network element is mainly used for functions such as access control, mobility management, and attachment and detachment. The access management network element may further serve as an anchor for a connection between N1 signaling (namely, N1 interface signaling, which is referred to as N1 signaling for brevity) and N2 signaling (namely, N2 interface signaling, which is referred to as N2 signaling for brevity), and provide routing of an N1/N2 session management (session management, SM) message for a session management network element. The access management network element may further maintain and manage status information of UE.

In a 5G communication system, the access management network element may be an AMF. In a future communication system, the access management network element may still be the AMF, or may have another name. This is not limited in this application.

4. A network capability exposure network element is mainly configured to manage exposure network data and an external application. The network exposure network element can provide a corresponding security assurance, to ensure security from the external application to a 3GPP network, and provide functions such as external application quality of service (quality of service, QoS) customization capability exposure, mobility status event subscription, and AF request distribution.

In a 5G communication system, the network exposure network element may be an NEF. In a future communication system, the network exposure network element may still be the NEF, or may have another name. This is not limited in this application.

5. An application network element is mainly configured to provide services for a 3GPP network, for example, interact with a policy control network element to perform policy control.

In a 5G communication system, the application network element may be an AF. In a future communication system, the application network element may still be the AF, or may have another name. This is not limited in this application.

6. A location management network element is mainly configured to: manage all resources used for UE positioning, calculate a final positioning result and precision. The location management network element is further configured to: connect to an AMF through an NL1 interface for various UE positioning signaling transmission. The location management network element is further configured to: negotiate a positioning capability with UE, send auxiliary data, and request positioning according to the long-term evolution positioning protocol (long-term evolution positioning protocol, LPP). The location management network element is further configured to exchange RAN positioning information with a RAN according to the New Radio Positioning Protocol A (new radio positioning protocol a, NRPPa).

In a 5G communication system, the location management network element may be an LMF. In a future communication system, the location management network element may still be the LMF, or may have another name. This is not limited in this application.

7. A data management network element is mainly configured to manage subscription data of UE, including storage and management of a UE identifier, access authorization of the UE, and the like. The data management network element may further generate 3GPP authentication credentials for the UE. The data management network element may further register and maintain a network element currently serving the UE (for example, an AMF represented by an AMF ID 1 is a current serving AMF (serving AMF) of the UE).

In a 5G communication system, the data management network element may be a UDM. In a future communication system, unified data management may still be the UDM, or may have another name. This is not limited in this application.

8. A gateway mobile location center network element sends a positioning request to an AMF through an NL2 interface, and returns a final positioning result to a positioning center.

In a 5G communication system, the gateway mobile location center network element may be a GMLC. In a future communication system, the gateway mobile location center network element may still be the GMLC, or may have another name. This is not limited in this application.

9. A location retrieval function network element, which may be configured with a GMLC or configured separately, is responsible for retrieving or verifying location information, and providing routing and related information for a UE that has initiated an emergency session.

In a 5G communication system, the location retrieval network element may be an LRF. In a future communication system, the location retrieval network element may still be the LRF, or may have another name. This is not limited in this application.

In the network architecture shown in FIG. 1, network elements may communicate with each other through interfaces shown in the figure, and some interfaces may be implemented in a manner of service-based interfaces. As shown in FIG. 1, the UE and the AMF may communicate with each other through the N1 interface. The RAN and the AMF may communicate with each other through the N2 interface. Relationships between other interfaces and network elements are shown in FIG. 1. For brevity, details are not described herein.

It should be further understood that the foregoing network architecture is merely an example for description, and the network architecture to which embodiments of this application are applicable is not limited thereto. Any network architecture that can implement functions of the network elements is applicable to embodiments of this application.

It should be further understood that the AMF, UDM, LMF, NEF, LRF, GMLC, and the like shown in FIG. 1 may be understood as network elements configured to implement different functions, for example, may be combined into a network slice as required. These network elements may be independent devices, or may be integrated into a same device to implement different functions, or may be a network element in a hardware device, or may be a software function running on dedicated hardware, or may be an instantiated virtualization function on a platform (for example, a cloud platform). A specific form of the network element is not limited in this application.

It should be further understood that one or more services may be obtained through division into the network elements or the functions. Further, there may be services independent of network functions. In this application, instances of the functions, instances of services included in the functions, or instances of the services independent of network functions may be referred to as service instances. In addition, in an actual deployment, the network elements with different functions may be co-deployed. For example, the access and mobility management network element and the session management network element may be co-deployed, and the session management network element and a user plane network element may be co-deployed. When two network elements are co-deployed, interaction between the two network elements provided in embodiments of this application becomes an internal operation of the co-deployed network elements or may be omitted.

It should be further understood that the foregoing names are defined merely for distinguishing between different functions, and should not constitute any limitation on this application. This application does not exclude a possibility of using other names in the 6G network and another future network. For example, in the 6G network, some or all of the network elements may still use terms in 5G, or may use other names.

It should be further understood that names of interfaces between the network elements in FIG. 1 are merely examples, and the interfaces may have other names during a specific implementation. This is not specifically limited in this application. In addition, names of messages (or signaling) transmitted between the network elements are merely examples, and do not constitute any limitation on functions of the messages.

To facilitate understanding of embodiments of this application, terms or technologies in this application are briefly described.

### 1. Location service (location service, LCS)

There are four parts in a location positioning service architecture of a 5G network: a terminal device, a radio access network RAN, a core network, and a positioning APP. The core network includes the AMF, UDM, GMLC, and LMF network elements. The GMLC and LRF may be deployed in a converged manner or may be deployed separately. The GMLC communicates with the AMF through the NL2 interface, and the LMF communicates with the AMF through the NL1 interface. The positioning APP, namely the LCS Client, is an external application that triggers a positioning function.

Based on positioning request initiators, there are three types of standard positioning services: a mobile originating location request (Mobile Originating Location Request, MO-LR), a mobile terminating location request (Mobile Terminating Location Request, MT-LR), and a network induced location request (Network Induced Location Request, NI-LR).

### 2. Mobile terminating location request

The MT-LR is any positioning request sent from a location service client LCS Client to an LCS server. This method provides a passive query mechanism for a party to be performed positioning. The MT-LR request mode is the most common mode because the LCS can be used to develop various specific applications based on a positioning capability of an operator network and a user can identify a positioning request of the user based on various positioning service access modes.

It should be noted that the terms or the technologies all belong to the conventional art, and are not limited.

It should be understood that the term "and/or" in this specification is merely an association relationship for describing associated objects, and represents that three relationships may exist. For example, A and/or B may represent the following three cases: Only A exists, both A and B exist, and only B exists. In addition, the character "/" in this specification generally indicates an "or" relationship between the associated objects.

The foregoing briefly describes the terms used in this application, and details are not described in the following embodiments. The following describes in detail the communication method provided in embodiments of this application with reference to the accompanying drawings. Embodiments provided in this application may be applied to the network architecture shown in FIG. 1. This is not limited.

Based on the network architecture shown in FIG. 1, when performing the positioning service, the AMF separately queries and obtains an LMF and a GMLC device. Currently, in the 3GPP standard, the AMF cannot select an LMF specified by the GMLC, or an LMF and a GMLC deployed in a same location area. Therefore, in the positioning service, how to select an LMF and a GMLC that are in a same location area or deployed on a same device to perform positioning, to ensure information security becomes an urgent problem to be resolved in the industry.

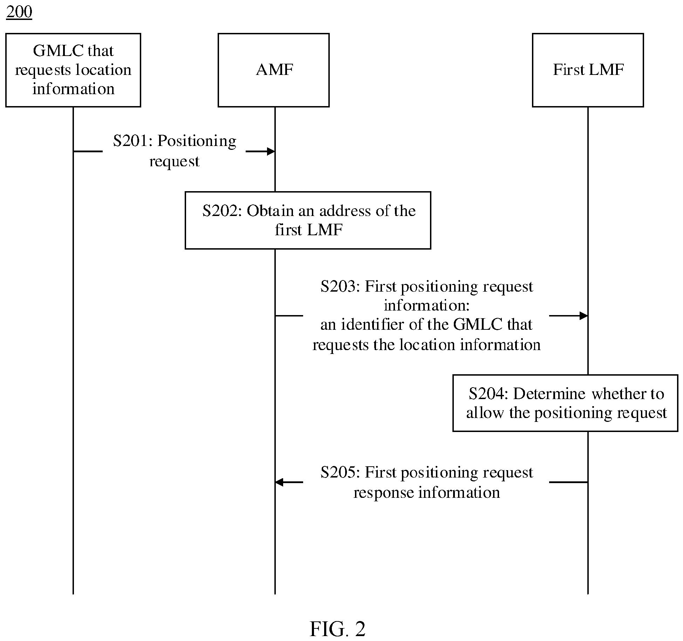

This application provides a communication method, to select an appropriate network element for positioning, so as to improve information security. The following describes the communication method provided in embodiments of this application with reference to FIG. 2 to FIG. 5.

FIG. 2 is a schematic diagram of a communication method 200 according to an embodiment of this application. The method 200 may include the following steps.

S201: A GMLC that requests location information sends a positioning request to an AMF.

Correspondingly, the AMF receives the positioning request from the GMLC that requests the location information.

It should be understood that after a terminal device triggers the positioning request, the GMLC to which the terminal device belongs, namely, the GMLC that requests the location information, sends the positioning request to the AMF, to request to obtain the location information. The location information is a location of the terminal device. The location information may be information such as a longitude, a latitude, or an altitude. This is not limited.

The positioning request includes an identifier of the GMLC that requests the location information. It should be understood that the identifier of the GMLC that requests the location information is information that uniquely identifies the GMLC to which the terminal device belongs. In other words, an enterprise may define, based on the identifier, whether two GMLCs belong to a same device. The identifier of the GMLC that requests the location information may be a network element instance identifier of the GMLC to which the terminal device belongs, or may be a host name of the GMLC to which the terminal device belongs, or may be a full qualified domain name (full qualified domain name, FQDN) of the GMLC to which the terminal device belongs, or the like. This is not limited.

Further, after receiving the positioning request, the AMF determines an address of a first LMF corresponding to the GMLC that requests the location information, to request for the location information from the first LMF. The method procedure shown in FIG. 2 further includes the following steps.

S202: The AMF obtains the address of the first LMF corresponding to the GMLC that requests the location information.

It should be understood that after receiving the positioning request from the GMLC that requests the location information, the AMF obtains, based on the identifier of the GMLC that requests the location information, the address of the first LMF corresponding to the GMLC that requests the location information.

It should be understood that the first LMF and a first GMLC belong to a same device or a same enterprise device. In other words, the first LMF and the first GMLC are deployed at a same physical location. In other words, the first LMF and the first GMLC are in a same group of network elements that serve a same device or a same enterprise device. An identifier of the first LMF corresponds to an identifier of the first GMLC. In other words, the identifier of the first GMLC corresponding to the identifier of the first LMF may be determined based on the identifier of the first LMF, or the identifier of the first LMF corresponding to the identifier of the first GMLC may be determined based on the identifier of the first GMLC.

The identifier of the first LMF may be a network element instance identifier of the first LMF, or may be a host name of the first LMF, or the like. This is not limited. The identifier of the first GMLC may be a network element instance identifier of the first GMLC, or may be a host name of the first LMF, or the like. This is not limited.

In a possible implementation, when a user is registered, subscription information of the terminal device includes the address of the first LMF or the identifier of the first LMF, the AMF obtains the subscription information in a registration procedure, and the AMF searches, based on the identifier of the GMLC that requests the location information, the subscription information for the address of the first LMF corresponding to the GMLC that requests the location information.

Optionally, the subscription information may further include an address of the first GMLC or the identifier of the first GMLC. The AMF searches, based on the identifier of the GMLC that requests the location information, the subscription information for an identifier of the first GMLC that is the same as the identifier of the GMLC that requests the location information, and then searches, based on the identifier of the first GMLC, for the address of the first LMF corresponding to the first GMLC.

In another possible implementation, when sending the positioning request to the AMF, the GMLC that requests the location information simultaneously sends the address of the first LMF or the identifier of the first LMF to the AMF.

Optionally, when the GMLC that requests the location information sends the identifier of the first LMF to the AMF, the AMF obtains the address of the first LMF based on the identifier of the first LMF.

Further, the AMF requests the first LMF, to obtain location information. The method procedure shown in FIG. 2 further includes the following steps.

S203: The AMF sends first positioning request information to the first LMF.

Correspondingly, the first LMF receives the first positioning request information from the AMF.

It should be understood that the AMF sends the first positioning request information to the first LMF based on the address of the first LMF.

The first positioning request information includes the identifier of the GMLC that requests the location information.

Further, the first LMF determines whether to allow the positioning request from the GMLC that requests the location information. The method procedure shown in FIG. 2 further includes the following steps.

S204: The first LMF determines, based on the identifier of the GMLC that requests the location information, whether to allow the positioning request from the GMLC that requests the location information.

It should be understood that after receiving the first positioning request information from the AMF, the first LMF determines an association relationship based on the identifier of the GMLC that requests the location information in the first positioning request information. The association relationship indicates whether the first LMF and the GMLC that requests the location information belong to a same device or a same enterprise device. If the association relationship is that the first LMF and the GMLC that requests the location information belong to a same device or a same enterprise device, the first LMF allows the positioning request from the GMLC that requests the location information, and the first LMF determines the location information of the terminal device. If the association relationship is that the first LMF and the GMLC that requests the location information do not belong to a same device or a same enterprise device, the first LMF does not allow the positioning request from the GMLC that requests the location information.

Further, the first LMF feeds back, to the AMF, a determining result of whether the positioning request is allowed. The method procedure shown in FIG. 2 further includes the following steps.

S205: The first LMF sends first positioning request response information to the AMF.

Correspondingly, the AMF receives the first positioning request response information from the first LMF.

The first positioning request response information is used to notify the AMF whether the positioning request for the terminal device is allowed.

Optionally, when the first positioning request response information is used to notify the AMF that the positioning request for the terminal device is allowed, the first positioning request response information includes the location information.

According to the method provided in the embodiment, after receiving the positioning request, the AMF obtains, based on the identifier of the GMLC that requests the location information, the address of the first LMF corresponding to the GMLC that requests the location information, and the first LMF determines, based on the identifier of the GMLC that requests the location information, whether to allow the positioning request from the GMLC that requests the location information. In the method, the AMF can search, based on the identifier of the GMLC that requests the location information, for the first LMF corresponding to the GMLC, and transfer the identifier of the GMLC that requests the location information to the first LMF, so that the first LMF can determine whether the GMLC that requests the location information is a GMLC deployed together with the first LMF, to determine whether to allow the positioning request. This ensures that an LMF and a GMLC in a same location area can be selected for positioning in a positioning service, so as to improve information security.

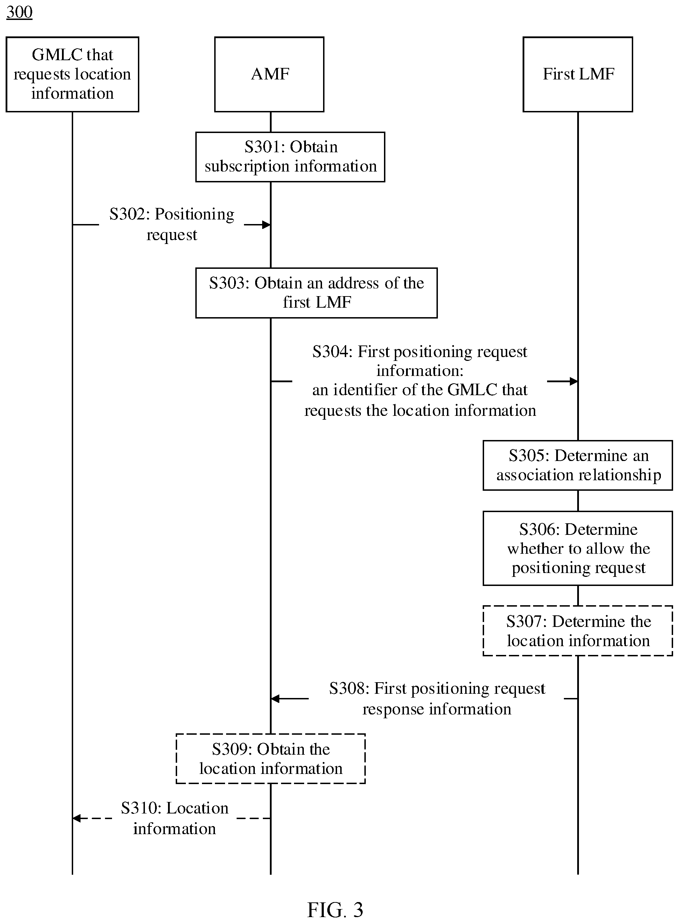

For ease of understanding, the following further describes the communication method described in FIG. 2 with reference to FIG. 3 to FIG. 5.

It should be noted that names of messages between network elements, names of parameters in the messages, or the like in the following embodiments of this application are merely examples, and there may be other names in a specific implementation. This is not specifically limited in embodiments of this application.

It should be noted that steps in the following embodiments of this application may also be mutually referenced, and terms and concepts may also be mutually referenced. This is not specifically limited in embodiments of this application.

FIG. 3 is a schematic diagram of a communication method 300 according to an embodiment of this application. The method 300 may include the following steps.

S301: An AMF obtains subscription information.

It should be understood that, when an operator system registers a user, information about a first LMF to which the user belongs is carried. After registration is completed, the subscription information of a terminal device includes the information about the first LMF. After the terminal device initiates a registration request, the AMF obtains the subscription information in a registration procedure.

The information about the first LMF includes an identifier of the first LMF, for example, a network element instance identifier of the first LMF or a host name of the first LMF. This is not limited.

Optionally, the information about the first LMF may further include an identifier of a first GMLC, an address of the first LMF, an FQDN of the first LMF, and the like. This is not limited. The identifier of the first GMLC may be a network element instance identifier of the first GMLC, or may be a host name of the first LMF, or the like. This is not limited.

It should be understood that the first LMF and the first GMLC belong to a same device or a same enterprise device. In other words, the first LMF and the first GMLC are deployed at a same physical location. In other words, the first LMF and the first GMLC are in a same group of network elements that serve a same device or a same enterprise device. The identifier of the first LMF corresponds to the identifier of the first GMLC. In other words, the identifier of the first GMLC corresponding to the identifier of the first LMF may be determined based on the identifier of the first LMF, or the identifier of the first LMF corresponding to the identifier of the first GMLC may be determined based on the identifier of the first GMLC.

Further, after triggering a positioning request, the terminal device indicates a GMLC to request the AMF, to obtain location information. The method procedure shown in FIG. 3 further includes the following steps.

S302: The GMLC that requests the location information sends the positioning request to the AMF.

Correspondingly, the AMF receives the positioning request from the GMLC that requests the location information.

It should be noted that the process of S302 is similar to that of S201. To avoid repetition, detailed descriptions thereof are omitted herein.

Further, after receiving the positioning request, the AMF determines an address of the first LMF corresponding to the GMLC that requests the location information, to request for the location information from the first LMF. The method procedure shown in FIG. 3 further includes the following steps.

S303: The AMF obtains the address of the first LMF corresponding to the GMLC that requests the location information.

It should be understood that after receiving the positioning request from the GMLC that requests the location information, the AMF searches, based on an identifier of the GMLC that requests the location information, the subscription information for the address of the first LMF corresponding to the GMLC that requests the location information.

Optionally, when the subscription information includes the identifier of the first GMLC, the AMF requests a network repository function (network repository function, NRF), to obtain the address of the first LMF.

Optionally, when the subscription information includes the FQDN of the first LMF, the AMF requests a domain name system (domain name system, DNS), to query the address of the first LMF.

Optionally, when the subscription information includes the identifier of the first LMF, the AMF obtains the address of the first LMF from a local device configuration based on the identifier of the first LMF.

Further, the AMF requests the first LMF, to obtain the location information. The method procedure shown in FIG. 3 further includes the following steps.

S304: The AMF sends first positioning request information to the first LMF.

Correspondingly, the first LMF receives the first positioning request information from the AMF.

It should be noted that the process of S304 is similar to that of S203. To avoid repetition, detailed descriptions thereof are omitted herein.

Further, after receiving the positioning request, the first LMF determines whether the GMLC that requests the location information is deployed same as the first LMF. The method procedure shown in FIG. 3 further includes the following steps.

S305 is optional. S305: The first LMF determines an association relationship.

It should be understood that after receiving the first positioning request information from the AMF, the first LMF determines the association relationship based on the identifier of the GMLC that requests the location information in the first positioning request information. The association relationship indicates whether the first LMF and the GMLC that requests the location information belong to a same device or a same enterprise device.

In a possible implementation, the first LMF determines the association relationship based on a network instance identifier of the first GMLC and the identifier of the GMLC that requests the location information. Specifically, the network instance identifier is in a UUID version 4 format (RFC 4122), has 128 bits in total, includes 32 hexadecimal numbers, and is divided into five segments of identifiers, which are specifically time-low "-" time-mid "-" time-high-and-version "-" clock-seq-and-reserved clock-seq-low "-" node. The node is 48 bits and includes six bytes (eight octets). A code rule that can be developed is as follows:

**Table 1: Network instance identifier code rule**

| Octet 6 | Octet 5 | Octet 4 | Octet 3 | Octet 2 | Octet 1 |
|---|---|---|---|---|---|
| Area code | City code | Company code | Device type | Device identifier | Device identifier |

It should be understood that the identifier of the GMLC that requests the location information has 128 bits in total. The first LMF compares the network instance identifier of the first GMLC with the identifier of the GMLC that requests the location information from left to right in sequence. If the two identifiers are the same, the association relationship is that the first LMF and the GMLC that requests the location information belong to a same device or a same enterprise device. On the contrary, if the two identifiers are different, the association relationship is that the first LMF and the GMLC that requests the location information do not belong to a same device or a same enterprise device.

In a possible implementation, if the identifier of the GMLC that requests the location information is an FQDN of the GMLC that requests the location information, the first LMF determines an association relationship based on an FQDN of the first GMLC and the FQDN of the GMLC that requests the location information.

Specifically, both the FQDN of the first GMLC and the FQDN of the GMLC that requests the location information include three fields, where a first field indicates whether to configure and preferentially select a topologically closest node, a second field is used to name an identifier of a specific interface on the node, and a third field is a canonical node name of a specific node. The first LMF compares the third field of the FQDN of the first GMLC with the third field of the FQDN of the GMLC that requests the location information. If the third fields of the two are the same, the association relationship is that the first LMF and the GMLC that requests the location information belong to a same device or a same enterprise device. On the contrary, if the third fields of the two are different, the association relationship is that the first LMF and the GMLC that requests the location information do not belong to a same device or a same enterprise device.

In a possible implementation, the first LMF determines the association relationship based on a GMLC relationship list associated with the first LMF and the identifier of the GMLC that requests the location information. Specifically, the first LMF locally configures the GMLC relationship list associated with the first LMF. The GMLC relationship list may be a list of network instance identifiers of GMLCs that are allowed for positioning, an address of the GMLC that is allowed for positioning, or an FQDN of the GMLC that is allowed for positioning. This is not limited. The first LMF queries the GMLC relationship list. If the relationship list includes the identifier of the GMLC that requests the location information, the association relationship is that the first LMF and the GMLC that requests the location information belong to a same device or a same enterprise device. On the contrary, if the relationship list does not include the identifier of the GMLC that requests the location information, the association relationship is that the first LMF and the GMLC that requests the location information do not belong to a same device or a same enterprise device.

Further, the first LMF determines whether to allow the positioning request from the GMLC that requests the location information. The method procedure shown in FIG. 3 further includes the following steps.

S306: The first LMF determines whether to allow the positioning request from the GMLC that requests the location information.

It should be understood that, if the association relationship is that the first LMF and the GMLC that requests the location information belong to a same device or a same enterprise device, the first LMF allows the positioning request from the GMLC that requests the location information; or if the association relationship is that the first LMF and the GMLC that requests the location information do not belong to a same device or a same enterprise device, the first LMF does not allow the positioning request from the GMLC that requests the location information.

S307 is optional. S307: The first LMF determines the location information.

It should be understood that, when the first LMF allows the positioning request from the GMLC that requests the location information, the first LMF determines the location information. The location information indicates a location of a terminal device for which the positioning request is initiated. The location information may be information such as a longitude, a latitude, or an altitude. This is not limited.

Further, a determining result of whether the positioning request is allowed is fed back to the AMF. The method procedure shown in FIG. 3 further includes the following steps.

S308: The first LMF sends first positioning request response information to the AMF.

Correspondingly, the AMF receives the first positioning request response information from the first LMF.

The first positioning request response information is used to notify the AMF whether the positioning request for the terminal device is allowed.

S309 is optional. S309: The AMF obtains the location information.

It should be understood that, optionally, when the first positioning request response information is used to notify the AMF that the positioning request for the terminal device is allowed, the first positioning request response information includes the location information, and the AMF obtains the location information.

Further, the AMF feeds back, to the GMLC that requests the location information, the determining result of whether the positioning request is allowed. The method procedure shown in FIG. 3 further includes the following steps.

S310 is optional. S310: The AMF sends the location information to the GMLC that requests the location information.

It should be understood that after the AMF obtains the location information, the AMF sends the location information to the GMLC that requests the location information.

Based on the solution, the information about the first LMF and the first GMLC that serve the terminal device is carried in subscription data during registration of the user, to ensure that an LMF and a GMLC that belong to a same device or a same enterprise device can be obtained in a subsequent procedure in which the AMF searches for the LMF. In addition, the identifier of the GMLC that requests the location information is transferred to the first LMF, so that the first LMF can determine whether the GMLC that requests the location information and the first LMF belong to a same device or a same enterprise device, to further avoid a positioning request for another device. This ensures security of device information.

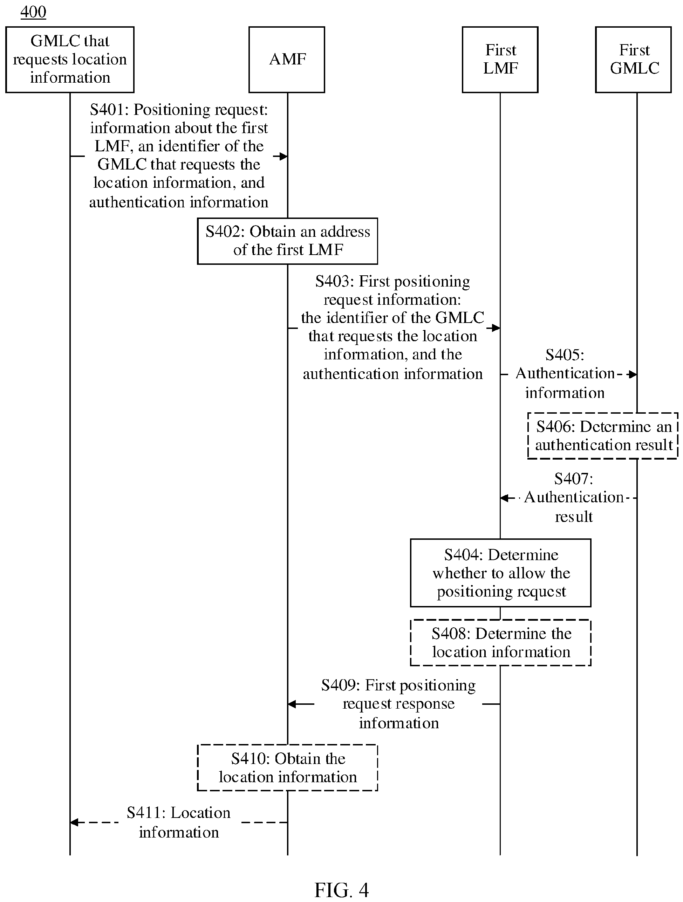

In the method, the first LMF determines whether the GMLC that requests the location information and the first LMF belong to a same device or a same enterprise device. To improve the security, an authentication procedure between the first LMF and the first GMLC may be added, and the first GMLC verifies again whether the GMLC that requests the location information and the first LMF belong to a same device or a same enterprise device, to further ensure the security of device information in a double authentication manner. The following provides detailed descriptions with reference to FIG. 4.

FIG. 4 is a schematic diagram of a communication method 400 according to an embodiment of this application. The method 400 may include the following steps.

S401: A GMLC that requests location information sends a positioning request to an AMF.

Correspondingly, the AMF receives the positioning request from the GMLC that requests the location information.

It should be understood that after a terminal device is successfully registered and the terminal device triggers the positioning request, the GMLC to which the terminal device belongs, namely, the GMLC that requests the location information, sends the positioning request to the AMF, to request to obtain the location information. The location information is a location of the terminal device. The location information may be information such as a longitude, a latitude, or an altitude. This is not limited.

The positioning request includes information about a first LMF, an identifier of the GMLC that requests the location information and authentication information.

The information about the first LMF includes an address of the first LMF or an FQDN of the first LMF. It should be understood that the first LMF and a first GMLC belong to a same device or a same enterprise device. In other words, the first LMF and the first GMLC are deployed at a same physical location. In other words, the first LMF and the first GMLC are in a same group of network elements that serve a same device or a same enterprise device. The FQDN of the first LMF corresponds to an FQDN of the first GMLC. In other words, the FQDN of the first GMLC corresponding to the FQDN of the first LMF may be determined based on the FQDN of the first LMF, or the FQDN of the first LMF corresponding to the FQDN of the first GMLC may be determined based on the FQDN of the first GMLC.

The identifier of the GMLC that requests the location information is information that uniquely identifies the GMLC to which the terminal device belongs. In other words, an enterprise may define, based on the identifier, whether two GMLCs belong to a same device. The identifier of the GMLC that requests the location information may be a network element instance identifier of the GMLC to which the terminal device belongs, or may be a host name of the GMLC to which the terminal device belongs, or may be the FQDN of the GMLC to which the terminal device belongs, or the like. This is not limited.

The authentication information is used to determine whether the positioning request from the GMLC that requests the location information is allowed. It should be understood that any GMLC can generate dedicated authentication information. The authentication information may be generated by the GMLC by using an encryption key and an encryption algorithm, or may be generated by the GMLC by using an integrity protection algorithm and an integrity protection key, or may be generated by the GMLC by using a specified integrity protection algorithm, a specified encryption algorithm, and a specified key. This is not limited.

It should be understood that the authentication information may alternatively be replaced with another name, for example, check information. If a function and content of the information are the same as or equal to a service discovery function selection information, these fall within the protection scope of this application. This is not limited.

Further, after receiving the positioning request, the AMF determines an address of the first LMF corresponding to the GMLC that requests the location information, to request for the location information from the first LMF. The method procedure shown in FIG. 4 further includes the following steps.

S402: The AMF obtains the address of the first LMF corresponding to the GMLC that requests the location information.

Optionally, when the information about the first LMF includes the FQDN of the first LMF or a host name of the first LMF, the AMF requests a DNS, to query the address of the first LMF.

Optionally, when the information about the first LMF includes the address of the first LMF, the AMF directly obtains the address of the first LMF.

Further, the AMF requests the first LMF, to obtain the location information. The method procedure shown in FIG. 4 further includes the following steps.

S403: The AMF sends first positioning request information to the first LMF.

Correspondingly, the first LMF receives the first positioning request information from the AMF.

It should be understood that the AMF sends the first positioning request information to the first LMF based on the address of the first LMF.

The first positioning request information includes the identifier of the GMLC that requests the location information and the authentication information.

Further, the first LMF determines whether to allow the positioning request from the GMLC that requests the location information. The method procedure shown in FIG. 4 further includes the following steps.

S404: The first LMF determines whether to allow the positioning request from the GMLC that requests the location information.

In a possible implementation, the first LMF determines, based on the authentication information, whether to allow the positioning request from the GMLC that requests the location information. Specifically, the first LMF and the first GMLC store a same encryption algorithm, an integrity protection algorithm, an encryption key, and an integrity protection key, and the first LMF performs validity check on the authentication information.

In a possible implementation, the first LMF and the first GMLC belong to a same device, and the first LMF requests, through an internal interface, the first GMLC to check the authentication information.

In a possible implementation, the first LMF sends the authentication information to the first GMLC, and the first GMLC determines, based on the authentication information, whether to allow the positioning request from the GMLC that requests the location information, and feeds back an authentication result to the first LMF.

S405 is optional. S405: The first LMF sends the authentication information to the first GMLC.

The first LMF obtains an address of the first GMLC based on an identifier of the first LMF, and sends the authentication information to the first GMLC.

S406 is optional. S406: The first GMLC determines the authentication result.

The first GMLC determines the authentication result based on the authentication information.

Specifically, when the authentication information is valid, or the authentication information is the authentication information generated by the first GMLC, the first GMLC determines that the authentication result is that the positioning request from the GMLC that requests the location information is allowed. When the authentication information is invalid, or the authentication information is not the authentication information generated by the first GMLC, the first GMLC determines that the authentication result is that the positioning request from the GMLC that requests the location information is not allowed.

S407 is optional. S407: The first GMLC sends the authentication result to the first LMF.

It should be understood that after determining the authentication result, the first GMLC feeds back the authentication result to the first LMF.

Further, when the first LMF allows the positioning request from the GMLC that requests the location information, the first LMF determines the location information. The method procedure shown in FIG. 4 further includes the following steps.

S408 is optional. S408: The first LMF determines the location information.

The location information indicates the location of the terminal device that initiates the positioning request, and the location information may be information such as a longitude, a latitude, or an altitude. This is not limited.

Further, a determining result of whether the positioning request is allowed is fed back to the AMF. The method procedure shown in FIG. 4 further includes the following steps.

S409: The first LMF sends first positioning request response information to the AMF.

Correspondingly, the AMF receives the first positioning request response information from the first LMF.

The first positioning request response information is used to notify the AMF whether the positioning request for the terminal device is allowed.

S410 is optional. S410: The AMF obtains the location information.

It should be understood that, optionally, when the first positioning request response information is used to notify the AMF that the positioning request for the terminal device is allowed, the first positioning request response information includes the location information, and the AMF obtains the location information.

Further, the AMF feeds back, to the GMLC that requests the location information, the determining result of whether the positioning request is allowed. The method procedure shown in FIG. 3 further includes the following steps.

S411 is optional. S411: The AMF sends the location information to the GMLC that requests the location information.

It should be understood that after the AMF obtains the location information, the AMF sends the location information to the GMLC that requests the location information.

Based on the solution, when sending the positioning request, the GMLC that requests the location information carries the dedicated authentication information of the GMLC and the address of the corresponding LMF. In this way, the GMLC that requests the location information can directly specify the LMF used by the AMF. In addition, an authentication procedure between the LMF and the GMLC is performed, it is ensured that an enterprise device is used by a user that does not belong to the enterprise, and security of device information is improved.

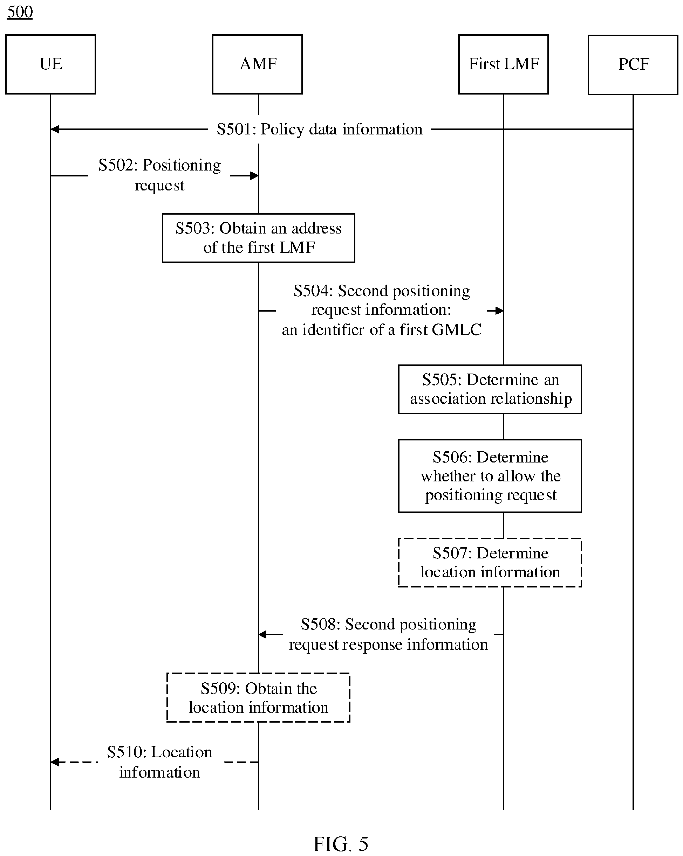

FIG. 2 to FIG. 4 mainly describe information that the information about the first LMF and the first GMLC that serve the terminal device is carried in subscription data during registration of the user, to ensure that an LMF and a GMLC that belong to a same device or a same enterprise device can be obtained in a subsequent procedure in which the AMF searches for the LMF. In addition, an authentication procedure between the LMF and the GMLC is added, to further avoid a positioning request for another device, so as to ensure the security of device information. FIG. 5 mainly describes information that policy data information in a registration process of a terminal device carries information about a first LMF and a first GMLC that serve the terminal device, to ensure that an LMF and a GMLC that belong to a same device or a same enterprise device can be obtained in a subsequent procedure in which an AMF searches for the LMF. The following provides detailed descriptions with reference to FIG. 5.

FIG. 5 is a schematic diagram of a communication method 500 according to an embodiment of this application. The method 500 may include the following steps.

S501: A policy control function (policy control function, PCF) sends policy data information to a terminal device.

Correspondingly, UE receives the policy data information from the PCF.

It should be understood that the PCF sends the policy data information to an AMF, and the AMF forwards the policy data information to the UE.

The policy data information includes information about a first LMF, and the information about the first LMF includes an identifier of the first LMF, for example, a network element instance identifier of the first LMF or a host name of the first LMF. This is not limited.

Optionally, the information about the first LMF may further include an identifier of a first GMLC, an address of the first LMF, an FQDN of the first LMF, and the like. This is not limited. The identifier of the first GMLC may be a network element instance identifier of the first GMLC, or may be a host name of the first LMF, or the like. This is not limited.

It should be understood that the first LMF and the first GMLC belong to a same device or a same enterprise device. In other words, the first LMF and the first GMLC are deployed at a same physical location. In other words, the first LMF and the first GMLC are in a same group of network elements that serve a same device or a same enterprise device. The identifier of the first LMF corresponds to the identifier of the first GMLC. In other words, the identifier of the first GMLC corresponding to the identifier of the first LMF may be determined based on the identifier of the first LMF, or the identifier of the first LMF corresponding to the identifier of the first GMLC may be determined based on the identifier of the first GMLC.

Further, after triggering a positioning request, the terminal device requests the AMF, to obtain location information. The method procedure shown in FIG. 5 further includes the following steps.

S502: The UE sends second positioning request information to the AMF.

Correspondingly, the AMF receives the positioning request from the UE.

It should be understood that after the terminal device initiates an emergency registration procedure or an emergency PDU session establishment procedure, the terminal device sends the second positioning request information to the AMF, to request to obtain the location information of the terminal device. The location information may be information such as a longitude, a latitude, or an altitude. This is not limited.

The second positioning request information includes the information about the first LMF.

It should be understood that the second positioning request information may alternatively be replaced with another name, for example, emergency registration request information or emergency PDU session establishment request information. If a function and content of the information are the same as or equal to a service discovery function selection information, these fall within the protection scope of this application. This is not limited.

Further, after receiving the positioning request, the AMF determines an address of the first LMF deployed on the terminal device, to request for the location information from the first LMF. The method procedure shown in FIG. 5 further includes the following steps.

S503: The AMF obtains the address of the first LMF.

It should be understood that the AMF queries an NRF or a DNS based on the information about the first LMF, to obtain the address of the first LMF.

Further, the AMF requests the first LMF, to obtain the location information. The method procedure shown in FIG. 5 further includes the following steps.

S504: The AMF sends third positioning request information to the first LMF.

Correspondingly, the first LMF receives the third positioning request information from the AMF.

It should be understood that the AMF sends the third positioning request information to the first LMF based on the address of the first LMF.

The second positioning request information includes the identifier of the first GMLC.

Further, after receiving the positioning request, the first LMF determines whether the GMLC that requests the location information is deployed same as the first LMF. The method procedure shown in FIG. 5 further includes the following steps.

S505 is optional. S505: The first LMF determines an association relationship.

It should be understood that after receiving the third positioning request information from the AMF, the first LMF determines the association relationship based on the identifier of the GMLC that requests the location information in the third positioning request information. The association relationship indicates whether the first LMF and the first GMLC belong to a same device or a same enterprise device.

It should be noted that the process of S505 is similar to that of S305. To avoid repetition, detailed descriptions thereof are omitted herein.

S506: The first LMF determines whether to allow the positioning request for the terminal device.

It should be noted that the process of S506 is similar to that of S306. To avoid repetition, detailed descriptions thereof are omitted herein.

S507 is optional. S507: The first LMF determines the location information.

It should be understood that, when the first LMF allows the positioning request for the terminal device, the first LMF determines the location information. The location information indicates a location of the terminal device that initiates the positioning request. The location information may be information such as a longitude, a latitude, or an altitude. This is not limited.

Further, a determining result of whether the positioning request is allowed is fed back to the AMF. The method procedure shown in FIG. 3 further includes the following steps.

S508: The first LMF sends third positioning request response information to the AMF.

Correspondingly, the AMF receives the third positioning request response information from the first LMF.

The second positioning request response information is used to notify the AMF whether the positioning request for the terminal device is allowed.

S509 is optional. S509: The AMF obtains the location information.

It should be understood that, optionally, when the third positioning request response information is used to notify the AMF that the positioning request for the terminal device is allowed, the second positioning request response information includes the location information, and the AMF obtains the location information.

S510 is optional. S510: The AMF sends the location information to the first GMLC.

It should be understood that after obtaining the location information, the AMF requests, based on the policy data information, the NRF or the DNS, to query the address of the first GMLC, and the AMF sends the location information to the first GMLC.

Based on the solution, the information about the first LMF and the first GMLC that serve the terminal device is carried in the policy data information in a registration process of the terminal device, to ensure that an LMF and a GMLC that belong to a same device or a same enterprise device can be obtained in a subsequent procedure in which the AMF searches for the LMF. In addition, the first LMF determines whether the first LMF and the GMLC belonging to the terminal device belong to a same device or a same enterprise device, to further avoid a positioning request for another device, so as to ensure device security.

It can be understood that examples in FIG. 2 to FIG. 5 in embodiments of this application are merely intended to help a person skilled in the art understand embodiments of this application, but are not intended to limit embodiments of this application to specific scenarios in the examples. Definitely, a person skilled in the art can make various equivalent modifications or changes based on the examples shown in FIG. 2 to FIG. 5, and such modifications or changes also fall within the scope of embodiments of this application.

It can be further understood that, in some scenarios, some optional features in embodiments of this application may not depend on another feature, or may be combined with another feature in some scenarios. This is not limited.

It can be further understood that the solutions in embodiments of this application may be properly combined for use, and explanations or descriptions of terms in embodiments may be mutually referenced or explained in embodiments. This is not limited.

It may be understood that sequence numbers in embodiments of this application do not mean an execution sequence, are merely used for differentiation for ease of description, and should not be construed as any limitation on the implementation processes of embodiments of this application.

It may be further understood that some message names, such as the first positioning request information or the location information, are involved in embodiments of this application. It should be understood that the names do not constitute a limitation on the protection scope of embodiments of this application.

It may be further understood that in the foregoing method embodiments, the methods and the operations implemented by the terminal device may alternatively be implemented by a component (for example, a chip or a circuit) of the terminal device. In addition, the methods and the operations implemented by the network device may be implemented by a component (for example, a chip or a circuit) of the network device. This is not limited. Corresponding to the methods provided in the foregoing method embodiments, an embodiment of this application further provides a corresponding apparatus. The apparatus includes corresponding modules configured to perform the foregoing method embodiments. The module may be software, hardware, or a combination of software and hardware. It may be understood that the technical features described in the method embodiments are also applicable to the following apparatus embodiments.

It should be understood that, the first LMF, the AMF, or the terminal device may perform some or all steps in the foregoing embodiment. These steps or operations are merely examples. In this embodiment of this application, another operation or variants of various operations may further be performed. In addition, the steps may be performed in an order different from that presented in the foregoing embodiments, and not all operations in the foregoing embodiments may need to be performed.

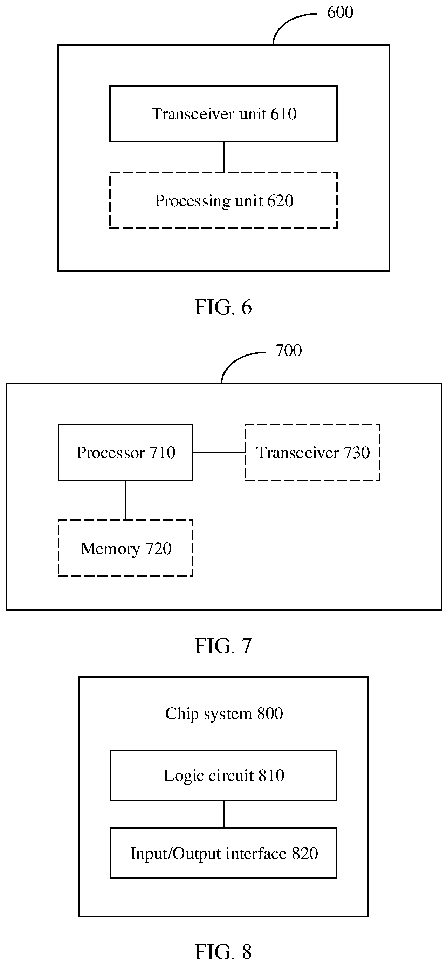

The foregoing describes in detail the communication methods provided in embodiments of this application with reference to FIG. 2 to FIG. 5. The following describes in detail communication apparatuses provided in embodiments of this application with reference to FIG. 6 to FIG. 8. It should be understood that descriptions of apparatus embodiments correspond to the descriptions of the method embodiments. Therefore, for content that is not described in detail, refer to the foregoing method embodiments. For brevity, some content is not described again.

FIG. 6 is a schematic block diagram of a communication apparatus according to an embodiment of this application. The apparatus 600 includes a transceiver unit 610. The transceiver unit 610 may be configured to implement a corresponding communication function. The transceiver unit 610 may also be referred to as a communication interface or a communication unit.

Optionally, the apparatus 600 may further include a processing unit 620. The processing unit 620 may be configured to perform data processing.

Optionally, the apparatus 600 further includes a storage unit. The storage unit may be configured to store instructions and/or data. The processing unit 620 can read the instructions and/or the data in the storage unit, so that the apparatus implements actions of different terminal devices in the foregoing method embodiments, for example, actions of the first LMF, the first GMLC, the AMF, or the terminal device.

The apparatus 600 may be configured to perform actions performed by the first LMF, the first GMLC, the AMF, or the terminal device in the foregoing method embodiments. In this case, the apparatus 600 may be the first LMF, the first GMLC, the AMF, or the terminal device, or a component of the first LMF, the first GMLC, the AMF, or the terminal device. The transceiver unit 610 is configured to perform receiving/sending-related operations of the first LMF, the first GMLC, the AMF, or the terminal device in the foregoing method embodiments. The processing unit 720 is configured to perform processing-related operations of the first LMF, the first GMLC, the AMF, or the terminal device in the foregoing method embodiments.

It should be further understood that the apparatus 600 herein is embodied in a form of a function unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may specifically be the first LMF, the first GMLC, the AMF, or the terminal device in the foregoing embodiments, and may be configured to perform procedures and/or steps corresponding to the first LMF, the first GMLC, the AMF, or the terminal device in the foregoing method embodiments. Alternatively, the apparatus 600 may specifically be the first LMF, the first GMLC, the AMF, or the terminal device in the foregoing embodiments, and may be configured to perform procedures and/or steps corresponding to the first LMF, the first GMLC, the AMF, or the terminal device in the foregoing method embodiments. To avoid repetition, details are not described herein again.

The apparatus 600 in the foregoing solutions has functions of implementing corresponding steps performed by the first LMF, the first GMLC, the AMF, or the terminal device in the foregoing methods. Alternatively, the apparatus 600 in the foregoing solutions has functions of implementing corresponding steps performed by the first LMF, the first GMLC, the AMF, or the terminal device in the foregoing methods. The function may be implemented by hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit like a processing unit may be replaced with a processor, to separately perform a sending/receiving operation and a related processing operation in the method embodiments.

In addition, the transceiver unit 610 may alternatively be a transceiver circuit (for example, may include a receiving circuit and a transmitter circuit), and the processing unit may be a processing circuit.

It should be noted that the apparatus in FIG. 6 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 7, an embodiment of this application provides another communication apparatus 700. The apparatus 700 includes a processor 710. The processor 710 is coupled to a memory 720. The memory 720 is configured to store a computer program or instructions and/or data. The processor 710 is configured to execute the computer program or the instructions stored in the memory 720, or read the data stored in the memory 720, to perform the methods in the foregoing method embodiments.

Optionally, there are one or more processors 710.

Optionally, there are one or more memories 720.

Optionally, the memory 720 and the processor 710 are integrated together, or disposed separately.

Optionally, as shown in FIG. 7, the apparatus 700 further includes a transceiver 730, and the transceiver 730 is configured to receive and/or send a signal. For example, the processor 710 is configured to control the transceiver 730 to receive and/or send a signal.

In a solution, the apparatus 700 is configured to implement operations performed by the first LMF, the first GMLC, the AMF, or the terminal device in the foregoing method embodiments.

For example, the processor 710 is configured to execute the computer program or the instructions stored in the memory 720, to implement a related operation of a first control plane device in the foregoing method embodiments, for example, the first LMF in any one of embodiments shown in FIG. 2 to FIG. 5, or the method of the first LMF in any one of embodiments shown in FIG. 2 to FIG. 5.

It should be understood that the processor mentioned in embodiments of this application may be a central processing unit (central processing unit, CPU), or may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

As shown in FIG. 8, an embodiment of this application provides a chip system 800. The chip system 800 (or may be referred to as a processing system) includes a logic circuit 810 and an input/output interface (input/output interface) 820.

The logic circuit 810 may be a processing circuit in the chip system 800. The logic circuit 810 may be coupled to a storage unit, and invoke instructions in the storage unit, so that the chip system 800 can implement the methods and functions in embodiments of this application. The input/output interface 820 may be an input/output circuit in the chip system 800, and output information processed by the chip system 800, or input to-be-processed data or signaling information into the chip system 800 for processing.

In a solution, the chip system 800 is configured to implement operations performed by the first LMF, the first GMLC, the AMF, or the terminal device in the foregoing method embodiments.

For example, the logic circuit 810 is configured to implement processing-related operations of the first LMF in the foregoing method embodiments, for example, processing-related operations of the first LMF in any one of embodiments shown in FIG. 2 to FIG. 5. The input/output interface 820 is configured to implement sending and/or receiving-related operations of the first LMF in the foregoing method embodiments, for example, sending and/or receiving-related operations performed by the first LMF in any one of embodiments shown in FIG. 2 to FIG. 5.

An embodiment of this application further provides a computer-readable storage medium. The computer-readable storage medium stores computer instructions used to implement the methods performed by the first LMF, the first GMLC, the AMF, or the terminal device in the foregoing method embodiments.

For example, when the computer program is executed by a computer, the computer is enabled to implement the methods performed by the first LMF, the first GMLC, the AMF, or the terminal device in the foregoing method embodiments.

An embodiment of this application further provides a computer program product, including instructions. When the instructions are executed by a computer, the method performed by the first LMF, the first GMLC, the AMF, or the terminal device in the foregoing method embodiments is implemented.

For explanations and advantageous effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or may include a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first location management network element, first positioning request information from an access management network element, wherein the first positioning request information comprises an identifier of a gateway mobile location center network element that requests location information, and the location information is a location of a terminal device;
determining, by the first location management network element based on the identifier of the gateway mobile location center network element that requests the location information, whether to allow a positioning request from the gateway mobile location center network element that requests the location information; and
sending, by the first location management network element, first positioning request response information to the access management network element, wherein the first positioning request response information is used to notify the access management network element whether the positioning request for the terminal device is allowed.

2. The method according to claim 1, wherein the determining, by the first location management network element based on the identifier of the gateway mobile location center network element that requests the location information, whether to allow a positioning request from the gateway mobile location center network element that requests the location information comprises:
determining, by the first location management network element, an association relationship based on the identifier of the gateway mobile location center network element that requests the location information; and
determining, by the first location management network element based on the association relationship, whether to allow the positioning request from the gateway mobile location center network element that requests the location information, wherein
the association relationship indicates whether the first location management network element and the gateway mobile location center network element that requests the location information belong to a same device or a same enterprise device.

3. The method according to claim 2, wherein the determining, by the first location management network element, an association relationship based on the identifier of the gateway mobile location center network element that requests the location information comprises:
determining, by the first location management network element, the association relationship based on an identifier of a first gateway mobile location center network element and the identifier of the gateway mobile location center network element that requests the location information, wherein
the first gateway mobile location center network element and the first location management network element belong to a same device or a same enterprise user.

4. The method according to any one of claims 1 to 3, wherein the determining, by the first location management network element based on the association relationship, whether to allow the positioning request from the gateway mobile location center network element that requests the location information comprises:
when the association relationship is that the first location management network element and the gateway mobile location center network element that requests the location information belong to a same device or a same enterprise device, allowing, by the first location management network element, the positioning request from the gateway mobile location center network element that requests the location information.

5. The method according to claim 4, wherein the method further comprises:
determining, by the first location management network element, the location information, wherein
the first positioning request response information comprises the location information.

6. The method according to any one of claims 1 to 3, wherein the determining, by the first location management network element based on the association relationship, whether to allow the positioning request from the gateway mobile location center network element that requests the location information comprises:
when the association relationship is that the first location management network element and the gateway mobile location center network element that requests the location information do not belong to a same device or a same enterprise device, skipping allowing, by the first location management network element, the positioning request from the gateway mobile location center network element that requests the location information.

7. The method according to claim 1, wherein the determining, by the first location management network element based on the identifier of the gateway mobile location center network element that requests the location information, whether to allow a positioning request from the gateway mobile location center network element that requests the location information comprises:
sending, by the first location management network element, authentication information to a first gateway mobile location center network element;
receiving, by the first location management network element, an authentication result from the first gateway mobile location center network element; and
determining, by the first location management network element based on the authentication result, whether to allow the gateway mobile location center network element that requests the location information to perform positioning, wherein
the first gateway mobile location center network element and the first location management network element belong to a same device or a same enterprise device, the first positioning request information further comprises the authentication information, and the authentication information is used to determine whether to allow the positioning request from the gateway mobile location center network element that requests the location information.

8. The method according to claim 1, wherein the determining, by the first location management network element based on the identifier of the gateway mobile location center network element that requests the location information, whether to allow a positioning request from the gateway mobile location center network element that requests the location information comprises:
determining, by the first location management network element based on authentication information, whether to allow the positioning request from the gateway mobile location center network element that requests the location information.

9. The method according to claim 7 or 8, wherein when the first positioning request response information is used to notify that the positioning request for the terminal device is allowed, the method further comprises:
determining, by the first location management network element, the location information, wherein
the first positioning request response information comprises the location information.

10. A communication method, comprising:
receiving, by an access management network element, a positioning request from a gateway mobile location center network element that requests location information, wherein the location information is a location of a terminal device;
obtaining, by the access management network element, an address of a first location management network element corresponding to the gateway mobile location center network element that requests the location information;
sending, by the access management network element, first positioning request information to the first location management network element, wherein the first positioning request information comprises an identifier of the gateway mobile location center network element that requests the location information; and
receiving, by the access management network element, first positioning request response information from the first location management network element, wherein the first positioning request response information is used to notify whether the positioning request for the terminal device is allowed.

11. The method according to claim 10, wherein the obtaining, by the access management network element, an address of a first location management network element corresponding to the gateway mobile location center network element that requests the location information comprises:
obtaining, by the access management network element, registration subscription information; and
obtaining, by the access management network element, the address of the first location management network element based on the registration subscription information, wherein
the registration subscription information comprises the address of the first location management network element or an identifier of the first location management network element.

12. The method according to claim 11, wherein when the subscription registration information comprises the identifier of the first location management network element, the method further comprises:
obtaining, by the access management network element, the address of the first location management network element based on the identifier of the first location management network element.

13. The method according to claim 10, wherein the obtaining, by the access management network element, an address of a first location management network element corresponding to the gateway mobile location center network element that requests the location information comprises:
receiving, by the access management network element, information from the gateway mobile location center network element that requests the location information; and
obtaining, by the access management network element, the address of the first location management network element based on the information from the gateway mobile location center network element that requests the location information, wherein
the information from the gateway mobile location center network element that requests the location information comprises the address of the first location management network element or an identifier of the first location management network element.

14. The method according to claim 13, wherein when the information from the gateway mobile location center network element that requests the location information comprises the identifier of the first location management network element, the method further comprises:
obtaining, by the access management network element, the address of the first location management network element based on the identifier of the first location management network element.

15. The method according to claim 13 or 14, wherein the information from the gateway mobile location center network element that requests the location information further comprises the identifier of the gateway mobile location center network element that requests the location information and authentication information, and the authentication information is used to determine whether to allow the positioning request from the gateway mobile location center network element that requests the location information.

16. The method according to claim 15, wherein the first positioning request information further comprises the authentication information.

17. The method according to claim 10, wherein when the first positioning request response information is used to notify that the positioning request for the terminal device is allowed, the first positioning request response information comprises the location information.

18. The method according to claim 17, wherein the method further comprises:
obtaining, by the access management network element based on the identifier of the gateway mobile location center network element that requests the location information, an address of the gateway mobile location center network element that requests the location information; and
sending, by the access management network element, the location information to the gateway mobile location center network element that requests the location information.

19. A communication method, comprising:
receiving, by a first gateway mobile location center network element, an authentication request from a first location management network element, wherein the authentication request comprises authentication information;
determining, by the first gateway mobile location center network element, an authentication result based on the authentication information, wherein the authentication result indicates whether a positioning request from a gateway mobile location center network element that requests location information is allowed; and
sending, by the first gateway mobile location center network element, the authentication result to the first location management network element, wherein
the first gateway mobile location center network element and the first location management network element belong to a same device or a same enterprise device, and the authentication information is used to determine whether to allow the positioning request from the gateway mobile location center network element that requests the location information.

20. The method according to claim 19, wherein when the authentication information is valid, or the authentication information is authentication information generated by the first gateway mobile location center network element, the determining, by the first gateway mobile location center network element, an authentication result based on the authentication information comprises:
determining, by the first gateway mobile location center network element, that the authentication result is that the positioning request from the gateway mobile location center network element that requests location information is allowed.

21. The method according to claim 19, wherein when the authentication information is invalid, or the authentication information is not the authentication information generated by the first gateway mobile location center network element, the determining, by the first gateway mobile location center network element, an authentication result based on the authentication information comprises:
determining, by the first gateway mobile location center network element, that the authentication result is that the positioning request from the gateway mobile location center network element that requests location information is not allowed.

22. A communication method, comprising:
receiving, by an access management network element, second positioning request information from a terminal device, wherein the second positioning request information is used to obtain location information of the terminal device;
obtaining, by the access management network element, an address of a first location management network element;
sending, by the access management network element, third positioning request information to the first location management network element, wherein the third positioning request information is used to request to obtain the location information, the location information is a location of the terminal device, and the third positioning request information comprises an identifier of a first gateway mobile location center network element; and
receiving, by the access management network element, third positioning request response information from the first location management network element, wherein the third positioning request response information indicates whether a positioning request for the terminal device is allowed, wherein
the first gateway mobile location center network element and the first location management network element belong to a same device or a same enterprise device, the second positioning request information comprises policy data information, and the policy data information comprises the identifier of the first gateway mobile location center network element.

23. The method according to claim 22, wherein the obtaining, by the access management network element, an address of a first location management network element comprises:
obtaining, by the access management network element, the address of the first location management network element based on the policy data information, wherein
the policy data information further comprises information about the first location management network element and information about the first gateway mobile location center network element.

24. The method according to claim 23, wherein when the policy data information comprises an identifier of the first location management network element, the method further comprises:
obtaining, by the access management network element, the address of the first location management network element based on the identifier of the first location management network element.

25. The method according to claim 22, wherein when the third positioning request response information is used to notify that the positioning request for the terminal device is allowed, the third positioning request response information comprises the location information.

26. The method according to claim 25, wherein the method further comprises:
obtaining, by the access management network element, an address of the first gateway mobile location center network element based on the identifier of the first gateway mobile location center network element; and
sending, by the access management network element, the location information to the first gateway mobile location center network element.

27. A communication method, comprising:
receiving, by a terminal device, policy data information from a policy control network element, wherein the policy data information comprises information about a first location management network element and a first gateway mobile location center network element that belong to the terminal device; and
sending, by the terminal device, second positioning request information to an access management network element, wherein the second positioning request information is used to obtain location information of the terminal device, and the location information is a location of the terminal device, wherein
the first gateway mobile location center network element and the first location management network element belong to a same device or a same enterprise device, and the second positioning request information comprises the policy data information.

28. A communication apparatus, comprising:
a processor, configured to execute a computer program stored in a memory, to enable the communication apparatus to perform the method according to any one of claims 1 to 27.

29. A computer-readable storage medium, wherein the computer-readable storage medium stores a computer program or instructions, and when the computer program or the instructions is/are executed by a processor, the method according to any one of claims 1 to 27 is performed.

30. A computer program product comprising instructions, wherein when the computer program product runs on a computer, the method according to any one of claims 1 to 27 is performed.

31. A chip system, comprising a processor, configured to: invoke a computer program or instructions from a memory and run the computer program or the instructions, to enable a communication apparatus on which the chip system is installed to implement the method according to any one of claims 1 to 27.
